# EUROPÄISCHE PATENTSCHRIFT

(11) **EP 3 211 027 B1**
(45) Veröffentlichungstag und Bekanntmachung des Hinweises auf die Patenterteilung: **01.07.2020**
(21) Anmeldenummer: 16000472.7
(22) Anmeldetag: 26.02.2016
(51) Int. Cl.: C08J 7/04, B32B 38/10, B42D 25/29

(54) **TRANSFERFOLIE MIT METALLISCHER SCHICHT UND VERFAHREN ZU DEREN HERSTELLUNG**
TRANSFER FILM WITH METALLIC LAYER AND METHOD FOR ITS PRODUCTION
FEUILLE DE TRANSFERT COMPRENANT UNE COUCHE METALLIQUE ET SON PROCEDE DE FABRICATION

(43) Veröffentlichungstag der Anmeldung: 30.08.2017
(73) Patentinhaber: Hueck Folien Gesellschaft m.b.H., 4342 Baumgartenberg (AT)
(72) Erfinder: Aigner, Georg, 4482 Ennsdorf (AT); Traßl, Stephan, 4342 Baumgartenberg (AT)
(74) Vertreter: Ofner, Clemens

(56) Entgegenhaltungen:
- US-A- 4 904 724
- US-A- 5 128 207
- US-A- 5 338 612
- US-A1- 2009 139 640
- US-A1- 2010 035 032

## Beschreibung

Die Erfindung betrifft eine Transferfolie gemäß dem Oberbegriff von Anspruch 1.

Transferfolien werden beispielsweise für den Transfer von Sicherheitselementen auf Wertdokumente, wie Banknoten, auf Sicherheitsdokumente wie Reisepässe oder Kreditkarten verwendet. Ferner finden Transferfolien bei der Herstellung elektronischer Bauelemente, insbesondere Leiterplatten, Anwendung.
Ein weiteres Anwendungsgebiet für Transferfolien ist der Einsatz bei der dekorativen Veredlung von Oberflächen.

Üblicherweise bestehen Transferfolien aus einer Trägerfolie, auf die die zu transferierenden Schichten aufgebracht sind. Die Übertragung der zu transferierenden Schichten auf das gewünschte Substrat erfolgt durch in-Kontakt-bringen der Schichten mit dem Substrat, wobei die transferierten Schichten auf dem Substrat mittels einer Kleberschicht fixiert werden. Anschließend wird die Trägerfolie der Transferfolie abgezogen.

Dazu müssen die zu transferierenden Schichten leicht und vollständig von dieser Trägerfolie ablösbar sein. Dazu wird auf der Trägerfolie üblicherweise vorerst eine sogenannte Releaseschicht vorgesehen, auf die dann die zu transferierenden Schichten aufgebracht werden. Die Releaseschicht ermöglicht die leichte Ablösbarkeit der Schichten von der Trägerfolie.

Eine Transferfolie der eingangsgenannten Art ist aus der US 2010/035032 A1 bekannt geworden. Weitere einschlägige Transferfolien mit einem ähnlichen Aufbau sind aus der US 5128207 A, der US 5338612 A, der US 2009/139640 A1 sowie der US 4904724 A bekannt geworden.

Aus WO 2007/048563 ist eine Transferfolie bekannt, die zum Transfer eines Mehrschichtkörpers auf eine Substrat verwendet wird. Die Transferfolie umfasst dabei einen Trägerfilm und eine ein- oder mehrschichtige Dekorlage. Zwischen Trägerfilm und Dekorlage ist eine Ablöseschicht, also eine Releaseschicht angeordnet, die die Trennung der Dekorlage vom Trägerfilm ermöglicht.

Nachteil dieser Releaseschicht ist, dass die Releaseschicht nach der Abtrennung der Trägerfolie auf den transferierten Schichten zurückbleibt. Das ist insbesondere bei der Verwendung von transferierten metallischen Schichten, insbesondere Kupferschichten zur Herstellung elektronischer Bauteile, wie Leiterplatten, von Nachteil, da die Kupferschicht dadurch nicht direkt kontaktierbar ist.

Zur Verminderung der Haftung von metallischen Schichten wurde daher versucht, die Oberfläche der Trägerfolie mechanisch oder chemisch (durch Behandlung mit Säuren) vorzubehandeln.

Durch die Behandlung der Folien wird die Oberflächenqualität verschlechtert. Durch die veränderte Oberfläche kommt es zu Störungen in der Beschichtungsqualität, welche sich negativ auf die Eigenschaften der zu transferierenden Schicht auswirkt.

Aufgabe der Erfindung war es eine Transferfolie bereitzustellen, die die Nachteile des Standes der Technik beseitigt und bei der sich die zu transferierende metallische Schicht leicht von der Trägerfolie löst.

Diese Aufgabe wird mit einer Transferfolie der eingangsgenannten Art durch die Merkmale des kennzeichnenden Teils von Anspruch 1 gelöst.

Als Trägerfolie kommen insbesondere flexible Kunststofffolien PI, PP, MOPP, PPS, PEEK, PEK, PEI, PSU, PAEK, LCP, PEN, PBT, PET, PA, PC, COC, POM, ABS, PVC, ETFE (Ethylentetrafluorethylen), PTFE (Polytetra-fluorethylen), PVF (Polyvinylfluorid), PVDF (Polyvinylidenfluorid), und EFEP (EthylenTetrafluorethylen-Hexafluorpropylen-Fluorterpolymer) in Frage.

Die Trägerfolien weisen vorzugsweise eine Dicke von 5 - 700 µm, bevorzugt 5 - 200 µm, besonders bevorzugt 23 - 50 µm auf.
Bevorzugt werden Trägerfolien aus PET (Polyethylentherephthalat) verwendet.

Auf diese Trägerfolie wird eine metallische Schicht, durch PVD- oder CVD-Verfahren etwa durch thermisches Verdampfen, durch Sputtern oder Elektronenstrahlbedampfung abgeschieden.

Als metallische Schichten eignen sich insbesondere Schichten aus Al, Cu, Ag, Au, Pt, Pd, Zn, Cr, Ti und dergleichen. Bevorzugt wird Cu verwendet.

In einem PVD- Verfahren wird die Beschichtung unter Vakuum (bis 10⁻¹² mbar, vorzugsweise 10⁻² bis 10⁻⁶ mbar) bei einer vom Dampfdruck und der Dicke der aufzubringenden Beschichtung abhängigen Temperatur auf dem Trägersubstrat beispielsweise durch thermisches Verdampfen, Lichtbogen- oder Elektronenstrahlverdampfen abgeschieden.

Eine weitere Möglichkeit ist das Aufbringen der Beschichtung durch AC- oder DC-Sputtern, wobei je nach Dicke der aufzubringenden Schicht und eingesetztem Material das entsprechende Verfahren gewählt wird.

In einem CVD-Verfahren werden die aufzubringenden Stoffe in Form von gasförmigen (z.B. organometallischen) Vorläuferverbindungen (sogenannten Precursoren) mittels eines inerten Trägergases (z.B. N₂, Argon) in ein Vakuumbeschichtungssystem eingebracht, durch Eintrag von Energie aufgebrochen und zur Reaktion gebracht. Ein Teil der Reaktionsprodukte kondensiert auf dem Substrat und bildet dort die gewünschte Schicht, die übrigen Reaktionsprodukte werden über ein Vakuumsystem entfernt. Gasförmige Precursoren können z.B. CO, CO₂, Sauerstoff, Silane, Methan, Ammoniak, Ferrocen, Trimethylaluminium, oder dergleichen sein.
Die Einbringung der Energie kann z.B. mittels eines lonen- oder Elektronenstrahls, eines Plasmas oder über erhöhte Temperatur erfolgen.

Die metallische Schicht kann dabei vollflächig oder partiell auf das Trägersubstrat aufgebracht werden. Die Dicke der metallischen Schicht kann dabei 5 - 5000 nm, bevorzugt 25 - 1000 nm betragen.

Auf die metallische Schicht wird anschließend eine vollflächige oder partielle Schicht aus einem Lack aufgebracht.
Geeignet sind sowohl wässrige als auch lösungsmittelbasierte Lacksysteme auf Basis von Acrylaten oder deren Copymeren, auf Basis von Ethylenacrylatcopolymeren. Die Lackzusammensetzungen sind Lacke auf Basis von Ethylenacrylatcopolymeren, die als in Ammoniak stabilisierte Dispersion aufgebracht ist.

Die Lackschicht kann durch ein Beschichtungsverfahren wie beispielsweise durch Aufstreichen, Gießen, Sprühen, Drucken (Siebdruck-, Tiefdruck-Flexodruck, oder Digitaldruckverfahren) oder Walzenauftragsverfahren auf die metallische Schicht aufgebracht werden.

Die Lackschicht schwächt durch die metallische Schicht hindurch die Haftung der metallischen Schicht zur Trägerfolie. Das in der Lackschicht vorhandene Lösungsmittel unterwandert durch die jeder metallischen Schicht eigene Nano/Mikroporosität die metallische Schicht. Dieser Vorgang wird durch die Lackkomponenten der Lackschicht unterstützt. Dadurch wird die Haftung der metallischen Schicht an der Trägerfolie soweit geschwächt, dass die Aufbringung einer Releaseschicht auf das Trägersusbtrat bzw. die Vorbehandlung des Trägersubstrats nicht mehr notwendig ist

Die metallische Schicht löst sich leicht und vollständig von der Trägerfolie und kann daher defektfrei und einfach auf ein Substrat transferiert werden. Dabei kann der Transfer einer metallischen Schicht vollflächig oder partiell erfolgen.

Soll der Transfer der metallischen Schicht nur bereichsweise, das heißt partiell erfolgen, kann die metallische Schicht bereits partiell auf die Trägerfolie aufgebracht sein.

Alternativ ist es möglich auf der Trägerfolie eine partielle Haftvermittlerschicht vorzusehen und die metallische Schicht vollflächig auszuführen.
Beim Transfer auf ein Substrat wird dann die metallische Schicht nur in den Bereichen auf das Substrat übertragen, in denen keine Haftvermittlerschicht auf dem Trägersubstrat vorhanden ist, in den Bereichen der Haftvermittlerschicht verbleibt die metallische Schicht auf der Trägerfolie.

Alternativ ist es weiter möglich die Lackschicht nur partiell auf die metallische Schicht aufzubringen. In diesem Fall löst sich die metallische Schicht nur in jenen Bereichen vom Trägersubstrat, in denen auch die Lackschicht vorhanden ist.

Es ist auch möglich mehrschichtige Aufbauten, gegebenenfalls mit gleichen oder unterschiedlichen metallischen Schichten, vollflächig oder partiell auf der Trägerfolie vorzusehen. Dabei werden die weitere metallische Schicht oder die weiteren metallischen Schichten nacheinander auf die auf der ersten metallischen Schicht vorhandene Lackschicht aufgebracht. Die Aufbringung dieser metallischen Schicht(en) erfolgt wie bereits beschrieben vorzugsweise durch ein PVD- oder CVD-Verfahren.

Auch weitere vollflächige oder partielle Lackschichten können in Kombination mit Metallen oder Metalloxiden nacheinander aufgebracht werden, z.B. zur Herstellung von Halbleitern.

Die weiteren Lackschichten können auch polymere Lackschichten sein, die beispielsweise optische, optisch aktive oder magnetische Merkmale aufweisen können.

Unter optischen Merkmalen werden hier insbesondere einen Farbeindruck hervorrufende Merkmale verstanden. Optisch aktive Merkmale werden beispielsweise von diffraktiven Strukturen, wie Hologrammen, Beugungsstrukturen, Oberflächenreliefs und dergleichen hervorgerufen.

Diese Lackschichten können vollflächig oder partiell, beispielsweise in Form von Zeichen, Mustern, Buchstaben Symbolen oder in Form einer Codierung aufgebracht sein.

Der Schichtaufbau kann anschließend mit einer Kleberschicht versehen werden, durch die die zu transferierenden Schichten auf einem Substrat fixiert werden. Alternativ kann diese Kleberschicht auch auf dem Substrat vorhanden sein. Die Kleberschicht kann dabei vollflächig oder partiell aufgebracht sein.

Als Klebebeschichtungen kommen beispielsweise Selbstklebebeschichtungen Heiß- oder Kaltsiegelklebebeschichtungen, 1 oder 2-Komponenten-Klebersysteme, Selbstklebefolien oder Hotmeltfolien in Frage.

Besonders geeignet ist die Transferfolie zum Transfer von metallischen Schichten auf Substrate, die nicht direkt mit einer metallischen Schicht versehen werden können, beispielsweise Gewebe, Polyethylenfolien, die nicht ausreichend temperaturbeständig sind oder Materialien, die stark ausgasen, wie beispielsweise Papier oder Papierverbunde, geschäumte Folien und dergleichen.

Daher sind mit dieser Transferfolie auch beispielsweise Sicherheitselemente für Wertdokumente, wie Banknoten Sicherheitspapiere, Ausweise und dergleichen herstellbar. Die Sicherheitselemente können dabei in Form von Fäden, Streifen oder Patches vorliegen.

Ferner ist die erfindungsgemäße Transferfolie geeignet zur Herstellung elektronischer Bauteile, da eine metallische Cu-Schicht nach dem Transfer einwandfrei kontaktierbar ist.

Die erfindungsgemäße Transferfolie ist auch geeignet zum Transfer auf Oberflächen von Plattenware oder Stückgut, insbesondere auch auf dreidimensionale Oberflächen, bzw. zum Transfer auf Oberflächen die anschließend dreidimensional verformt werden sollen.

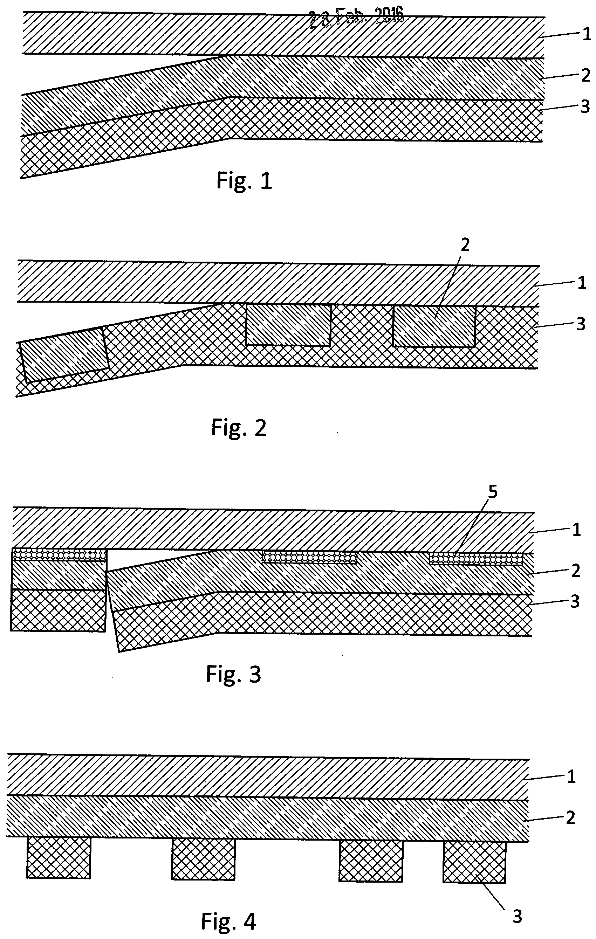

In den Figuren 1 bis 7 sind Ausführungsformen der erfindungsgemäßen Transferfolie dargestellt.

Darin bedeuten
1 die Trägerfolie
2 die metallische Schicht, wie eine Cu-Schicht
3 die Lackschicht
4 eine weitere metallische Schicht, beispielsweise eine Al-Schicht
5 eine Haftvermittlerschicht
6 eine weitere Trägerfolie
7 eine Klebebeschichtung zur Fixierung auf einem Substrat
8 eine Kaschierkleberschicht

In Figur 1 ist der Grundaufbau einer erfindungsgemäßen Transferfolie dargestellt. Auf eine Trägerfolie aus PET 1 ist eine vollflächige metallische Schicht 2 aus Cu aufgebracht.
Auf diese vollflächige CU-Schicht 2 ist anschließend eine Lackschicht 3 aufgebracht, die die Ablösung der Cu-Schicht von der Trägerfolie beim Transfer auf ein Substrat bewirkt.

In Figur 2 ist eine Transferfolie zur partiellen Übertragung einer Cu-Schicht auf ein Substrat dargestellt. Dabei ist auf der Trägerfolie 1 eine partielle Cu-Schicht 2 aufgebracht. Die Lackschicht 3 ist anschließend vollflächig aufgebracht.
In Figur 3 ist eine alternative Ausführungsform einer Transferfolie zur partiellen Übertragung einer Cu-Schicht auf ein Substrat dargestellt.

Auf die Trägerfolie 1 ist eine partielle Haftvermittlerschicht 5 aufgebracht. Anschließend wird eine vollflächige Cu-Schicht 2 und auf diese Cu-Schicht eine vollflächige Lackschicht 3 aufgebracht.
Beim Transfer trennt sich beim Abtrennen der Trägerfolie die Cu-Schicht in jenen Bereichen von der Trägerfolie 1, in denen keine Haftvermittlerschicht 5 vorhanden ist. In den Bereichen, in denen die Haftvermittlerschicht auf der Trägerfolie vorhanden ist, verbleibt sowohl die Cu-Schicht 2 als auch die Lackschicht 3 auf der Trägerfolie.

In Fig. 4 ist eine alternative Ausführungsform zu Fig. 3 dargestellt, Hier wird die Lackschicht partiell auf die metallische Schicht aufgebracht, In den Bereichen in denen die Lackschicht vorhanden trennt sich die Cu-Schicht beim Transferprozess vom Trägersubstrat

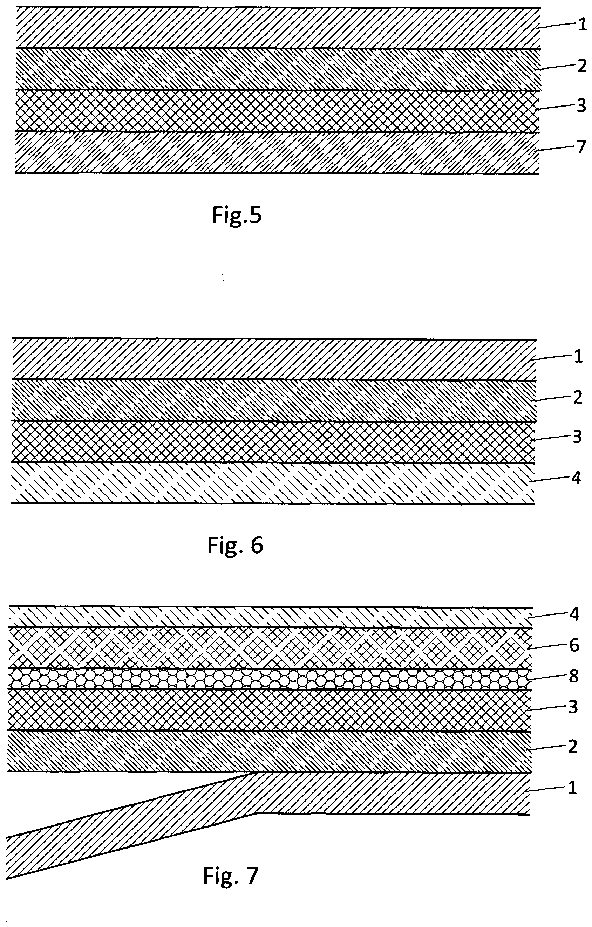

In Fig. 5 ist eine erfindungsgemäße Transferfolie dargestellt, die mittels einer Klebeschicht 7 auf einem Substrat fixiert wird. Nach der Fixierung auf dem Substrat wird die Trägerfolie 1 abgezogen, die dann freiliegende Cu-Schicht ist dann kontaktierbar

In Fig. 6 ist ein mehrschichtiger Aufbau der erfindungsgemäßen Transferfolie dargestellt.
Auf den wie in Fig. 1 dargestellten Aufbau wird auf die Lackschicht 3 eine weitere metallische Schicht 4, beispielsweise aus Aluminium, aufgebracht. Durch die dann zwischen den beiden unterschiedlichen Metallschichten liegenden Lackschicht wird auch ein elektrochemische Wechselwirkung der beiden metallischen Schichten untereinander verhindert.
Es ist aber auch möglich, anstelle der Al- Schicht eine weitere Cu-Schicht auf die Lackschicht aufzubringen.

In Figur 7 ist eine beidseitig metallisierte Folie dargestellt. Dabei wird vorerst auf eine weitere Trägerfolie 6 eine metallische Schicht 4, beispielsweise eine Al-Schicht aufgebracht. Diese Trägerfolie 6 wird dann, beispielsweise mittels eines Kaschierklebers 8 gegen die Lackschicht 3 einer erfindungsgemäßen Transferfolie, wie sie in Fig. 1 dargestellt ist, kaschiert. Nach dem Ablösen der Trägerfolie 1 entsteht eine beidseitig metallisierte Folie, bei der die metallischen Schichten auf gegenüberliegenden Oberflächen der Trägerfolie 6 situiert sind.

## Patentansprüche

1. Transferfolie aufweisend eine Trägerfolie und eine darauf aufgebrachte metallische Schicht, wobei auf die metallische Schicht eine Schicht aus einem Lack aufgebracht ist, wobei die Lackschicht aus einem wasser- oder lösungsmittelhaltigen Lacksystem auf Basis von Acrylaten oder deren Copolymeren, besteht, **dadurch gekennzeichnet, dass** die Lackschicht auf Basis von Ethylenacrylatcopolymeren aufgebaut ist, die als mit Ammoniak stabilisierte Dispersion aufgebracht ist und die Haftung der metallischen Schicht auf der Trägerfolie durch die metallische Schicht hindurch vermindert.

2. Transferfolie nach Anspruch 1, **dadurch gekennzeichnet, dass** die metallische Schicht aus Al, Cu, Ag, Au, Pt, Pd, Zn, Cr, Ti besteht.

3. Transferfolie nach einem der Ansprüche 1 oder 2, **dadurch gekennzeichnet, dass** die metallische Schicht vollflächig oder partiell auf die Trägerfolie aufgebracht ist.

4. Transferfolie nach einem der Ansprüche 1 bis 3, **dadurch gekennzeichnet, dass** die Lackschicht vollflächig oder partiell auf die metallische Schicht aufgebracht ist.

5. Transferfolie nach einem der Ansprüche 1 bis 4, **dadurch gekennzeichnet, dass** auf die Trägerfolie partiell eine Haftvermittlerschicht aufgebracht ist.

6. Transferfolie nach einem der Ansprüche 1 bis 5, **dadurch gekennzeichnet, dass** auf die Lackschicht eine weitere metallische Schicht aufgebracht ist.

7. Transferfolie nach einem der Ansprüche 1 bis 6, **dadurch gekennzeichnet, dass** auf die Lackschicht eine vollflächige oder partielle Druckschicht mit optischen optisch aktiven oder magnetischen Merkmalen aufgebracht ist.

8. Transferfolie nach einem der Ansprüche 1 bis 7, **dadurch gekennzeichnet, dass** die Transferfolie mit einer Klebeschicht versehen ist, die auf dem Schichtaufbau situiert ist.

9. Transferfolie nach einem der Ansprüche 1 bis 8, **dadurch gekennzeichnet, dass** die Transferfolie auf der Seite der Lackschicht gegen eine weitere Trägerfolie kaschiert ist, die auf der gegenüberliegenden Oberfläche eine weitere metallische Schicht aufweist.

10. Verfahren zur Herstellung einer Transferfolie, **gekennzeichnet, durch** folgende Verfahrensschritte:
- Breitstellen einer Trägerfolie
- Aufbringen einer metallischen Schicht auf eine Oberfläche der Trägerfolie
- Aufbringen einer Lackschicht auf Basis von Ethylenacrylatcopolymeren, die mit Ammoniak stabilisiert ist, auf die metallische Schicht.

11. Verwendung der Transferfolie nach einem der Ansprüche 1 bis 9 zur Herstellung von Sicherheitselementen für Wertdokumente und Sicherheitspapiere, elektronischer Bauteile, wie Leiterplatten, zur Aufbringung metallischer Schichten auf Oberflächen von Plattenware oder Stückgut.

## Claims

1. A transfer film comprising a carrier film and a metallic layer applied thereto, wherein a layer of a lacquer is applied to the metallic layer, wherein the lacquer layer consists of a water-containing or solvent-containing lacquer system based on acrylates or copolymers thereof, **characterized in that** the lacquer layer based on ethylene-acrylate copolymers is applied as a dispersion stabilized with ammonia and reduces the adhesion of the metallic layer to the carrier film through the metallic layer.

2. The transfer film according to claim 1, **characterized in that** the metallic layer consists of Al, Cu, Ag, Au, Pt, Pd, Zn, Cr, Ti.

3. The transfer film according to one of claims 1 or 2, **characterized in that** the metallic layer is applied to the carrier film on the full surface or partially.

4. The transfer film according to one of claims 1 to 3, **characterized in that** the lacquer layer is applied to the metallic layer on the full surface or partially.

5. The transfer film according to one of claims 1 to 4, **characterized in that** a bonding layer is partially applied to the carrier film.

6. The transfer film according to one of claims 1 to 5, **characterized in that** a further metallic layer is applied to the lacquer layer.

7. The transfer film according to one of claims 1 to 6, **characterized in that** a full-surface or partial printing layer with optical optically active or magnetic features is applied to the lacquer layer.

8. The transfer film according to one of claims 1 to 7, **characterized in that** the transfer film is provided with an adhesive layer situated on the layer structure.

9. The transfer film according to one of claims 1 to 8, **characterized in that** the transfer film is laminated on the side of the lacquer layer against a further carrier film which has a further metallic layer on the opposite surface.

10. A method for producing a transfer film, **characterized by** the following method steps:
- providing a carrier film
- applying a metallic layer to a surface of the carrier film
- applying a lacquer layer which is based on ethylene-acrylate copolymers and stabilized with ammonia to the metallic layer.

11. Use of the transfer film according to one of claims 1 to 9 for producing security elements for value documents and security papers, electronic components such as circuit boards, for applying metallic layers to surfaces of pallet goods or piece goods.

## Revendications

1. Feuille de transfert, comportant une feuille porteuse et une couche métallique appliquée dessus, une couche de laque étant appliquée sur la couche métallique, la couche de laque se composant d'un système de laque, contenant de l'eau ou des solvants, à base d'acrylates ou de leurs copolymères, **caractérisée en ce que** la couche de laque est réalisée sur la base de copolymères éthylène/acrylate, qui est appliquée en tant que dispersion stabilisée à l'ammoniac et qui réduit l'adhérence de la couche métallique sur la feuille porteuse à travers la couche métallique.

2. Feuille de transfert selon la revendication 1, **caractérisée en ce que** la couche métallique se compose de Al, Cu, Ag, Au, Pt, Pd, Zn, Cr, Ti.

3. Feuille de transfert selon l'une des revendications 1 ou 2, **caractérisée en ce que** la couche métallique est appliquée sur toute la surface ou partiellement sur la feuille porteuse.

4. Feuille de transfert selon l'une des revendications 1 à 3, **caractérisée en ce que** la couche de laque est appliquée sur toute la surface ou partiellement sur la couche métallique.

5. Feuille de transfert selon l'une des revendications 1 à 4, **caractérisée en ce qu'**une couche de promoteur d'adhérence est appliquée partiellement sur la feuille porteuse.

6. Feuille de transfert selon l'une des revendications 1 à 5, **caractérisée en ce qu'**une autre couche métallique est appliquée sur la couche de laque.

7. Feuille de transfert selon l'une des revendications 1 à 6, **caractérisée en ce qu'**une couche d'impression, sur toute la surface ou partielle, ayant des caractéristiques optiques, optiquement actives ou magnétiques est appliquée sur la couche de laque.

8. Feuille de transfert selon l'une des revendications 1 à 7, **caractérisée en ce que** la feuille de transfert est munie d'une couche adhésive qui est située sur la structure en couche.

9. Feuille de transfert selon l'une des revendications 1 à 8, **caractérisée en ce que** la feuille de transfert est contrecollée sur le côté de la couche de laque contre une autre feuille porteuse qui comporte une autre couche métallique sur la surface opposée.

10. Procédé de fabrication d'une feuille de transfert, **caractérisé par** les étapes de procédé suivants :
- fourniture d'une feuille porteuse
- application d'une couche métallique sur une surface de la feuille porteuse
- application, sur la couche métallique, d'une couche de laque à base de copolymères éthylène/acrylate qui est stabilisée avec de l'ammoniac

11. Utilisation de la feuille de transfert selon l'une des revendications 1 à 9 pour la fabrication d'éléments de sécurité pour des documents de valeur et des papiers de sécurité, de composants électroniques tels que des circuits imprimés, pour l'application de couches métalliques sur des surfaces de produits en plaque ou de marchandises diverses.
